# EUROPÄISCHE PATENTANMELDUNG

(11) **EP 2 499 919 A1**
(43) Veröffentlichungstag der Anmeldung: **19.09.2012**
(21) Anmeldenummer: 12156284.7
(22) Anmeldetag: 21.02.2012
(51) Int. Cl.: A23C 3/033, B29C 65/10, B21C 37/08, B21C 37/15, B29C 53/36

(54) **Fördervorrichtung**

(30) Priorität: 17.03.2011 DE 102011014366
(71) Anmelder: Förster Technik GmbH, 78234 Engen (DE)
(72) Erfinder: Förster, Thomas, 78234 Engen (DE)
(74) Vertreter: Engelhardt & Engelhardt

(57) **Zusammenfassung**

Bei einer Fördervorrichtung (1) bestehend aus zwei Einfüll- (6) und zwei Entnahmestationen (7), durch die jeweils ein flüssiges Nahrungsmittel (8), insbesondere Milch (8), mit unterschiedlicher Temperatur transportiert ist,
- aus zwei Leitungen (9, 10), durch die jeweils eine der Einfüll- und Entnahmestationen (6, 7) paarweise verbunden sind,
- aus mindestens einer Pumpe (11), durch die das Nahrungsmittel (8) im Gegenstrom durch die beiden Leitungen (9, 10) gepumpt ist
- und aus einem Wärmeübertragungsmedium (12), durch das die beiden Leitungen (9, 10) thermisch miteinander gekoppelt sind,
soll die Fördervorrichtung (1) unabhängig von einer vorgegebenen Ausrichtung betätigbar sein und die Wärmeübertragung zwischen den beiden die Entnahme- und Einfüllstation (6, 7) sollen jeweils paarweise miteinander verbunden sein, um eine optimale Wärmeübertragung zu erreichen.

Dies wird dadurch erreicht, dass das Wärmeübertragungsmedium (12) als fester Körper (13 oder 14) ausgestaltet ist, dass der Körper (13, 14) die beiden Leitungen (9, 10) ganz oder teilweise umschließt und diese fest miteinander verbindet.

## Beschreibung

Die Erfindung bezieht sich auf eine Fördervorrichtung nach dem Oberbegriff des Patentanspruches 1 sowie auf ein Verfahren zur Herstellung einer Leitung für die Fördervorrichtung gemäß des Oberbegriffes von Patentspruch 13.

Aus der DE 103 28 518 A1 ist eine solche Fördervorrichtung bekannt geworden. Die Fördervorrichtung besteht dabei aus zwei Leitungen, die in einem Behälter angeordnet sind. In dem Behälter ist ein flüssiges Wärmeübertragungsmedium, insbesondere Wasser, eingefüllt. Die beiden Leitungen verlaufen in dem Behälter schraubenlinienförmig, um die Wärmeübertragungsstrecke in dem Behälter zu vergrößern und optimal auszunutzen. Beide Leitungen sind mit Vorratsbehältern, in denen die flüssige Milch mit unterschiedlichen Temperaturen eingefüllt ist, verbunden.

In einem Behälter ist beispielsweise pasteurisierte Milch gelagert, die eine Temperatur von etwa 72° aufweist und die abzukühlen ist, und zwar auf eine Temperatur auf etwa 32°. Um dies zu erreichen, um also eine Energierückgewinnung bereitzustellen, ist das Wärmeübertragungsmedium vorgesehen. Durch dieses soll nämlich die erwärmte Milch mit einer Temperatur von 72° genutzt werden, um eine Milch aus einem der Vorratsbehälter mit einer Temperatur von 20° auf eine Temperatur von 60° zu erwärmen, ohne dass hierfür zusätzliche Energie zur Erwärmung der Milch notwendig ist, denn durch die Milch mit einer Temperatur von 72°C wird das Wasserbad erwärmt; dieses gibt die derart erhaltene Wärme an die kühle Milch ab, wodurch diese schonend erwärmt ist.

Als nachteilig bei solchen Fördervorrichtungen hat sich herausgestellt, dass die Wärmeübertragung zwischen den beiden Leitungen durch das Wärmeübertragungsmedium in Form von Wasser erfolgt und dass Wasser einen Wärmeleitkoeffizienten aufweist, der derart niedrig ist, dass die Strecke zur Wärmeübertragung einen bestimmten Grenzbereich nicht unterschreiten darf, um die gewünschte Wärmeübertragung zu erreichen.

Darüber hinaus ist nachteilig, die Leitungen in dem Wärmeübertragungsmedium in vertikaler Richtung anzuordnen sind, denn in dem Wärmeübertragungsmedium bilden sich Temperaturschichten aus, die sich nicht miteinander vermischen und die aufgrund der physikalischen Gesetzmäßigkeiten von unten nach oben wärmer werden. Folglich kann eine solche Fördervorrichtung nicht in horizontaler Ebene betrieben werden, denn dies würde dazu führen, dass die Wärmeübertragung nicht stattfindet, da die Temperaturschicht in horizontaler Ebene konstant ist bzw. die schraubenlinienförmig ausgestalteten Leitungen in völlig unterschiedlichen Temperaturschichten hindurchgeführt sind, so dass keine Wärmeübertragung stattfindet bzw. die Wärmeübertragung zwischen den Temperaturbereichen der jeweiligen Schichten des Wärmeübertragungsmediums hin und her schwankt.

Des Weiteren hat sich bei dem Transport bzw. der Förderung von Milch in Leitungen herausgestellt, dass die Querschnittsflächen der Leitungen, die von der Milch durchströmt ist, eine möglichst konstante Fördergeschwindigkeit bezogen auf die Leitungsquerschnittsfläche aufweisen sollten, um Ablagerung von Schwebepartikeln, die in der Milch enthalten sind, insbesondere in den Eckbereichen von rechteckförmigen Leitungen, zu vermeiden.

Es ist daher Aufgabe der Erfindung, eine Fördervorrichtung der eingangs genannten Gattung derart weiterzubilden, dass die Fördervorrichtung unabhängig von einer vorgegebenen Ausrichtung betrieben werden kann und dass die Wärmeübertragung zwischen den beiden die Entnahme- und Einfüllstationen jeweils paarweise verbindenden Leitungen optimal und in einer möglichst kurz bemessen Wärmeübertragungsstrecke erfolgt. Darüber hinaus soll die Leitung möglichst kostengünstig und einfach herstellbar sein.

Diese Aufgaben werden erfindungsgemäß durch die Merkmale des kennzeichnenden Teils von Patentanspruch 1 und bezüglich der kostengünstigen Herstellung einer solchen erfindungsgemäßen Leitung durch die Merkmale des Verfahrensanspruches 13 gelöst.

Weitere vorteilhafte Weiterbildungen der Erfindung ergeben sich aus den Unteransprüchen.

Dadurch, dass das Wärmeübertragungsmedium aus einem festen Körper gebildet ist, durch den die beiden Leitungen wärmeleitend und fest miteinander verbunden sind, entsteht ausschließlich in dem Körper eine Wärmeübertragung, so dass die Anordnung der Leitungen frei wählbar ist. Demnach kann die Leitung sowohl vertikal als auch horizontal oder in jeder beliebigen Schrägstellung den Transport von Milch und die Abkühlung bzw. Erwärmung der Milch innerhalb der Wärmeübertragungsstrecke gewährleisten. Zudem ist die Wärmeübertragungsstrecke verringert, denn der Wirkungsgrad der Wärmeübertragung ist verbessert, da die Werkstoffe, aus denen der Körper gefertigt ist, einen höheren Wärmeleitkoeffizient als Wasser aufweisen.

Wenn der Körper als dünnwandige Trennplatte zwischen den beiden Leitungen ausgebildet ist, erfolg eine Wärmeübertragung ausschließlich über die Trennplatte. Eine solche Wärmeübertragung weist einen nochmals erhöhten Wirkungsgrad auf, denn der Abstand zwischen den unterschiedlich temperierten Flüssigkeiten ist gering gehalten, so dass die Wärmeübertragung innerhalb einer äußerst klein bemessenen Querschnittsfläche der Trennplatte erfolgt.

Wenn das Wärmeübertragungsmedium als Stange, als Quader oder als Ellipsoid ausgebildet ist und die beiden Leitungen vollständig in diesen Bauteilen angeordnet oder zumindest in deren Zwischenraum von den Bauteilen verbunden ist, dann erfolgt die Wärmeübertragung im Bereich der Stange, des Quaders oder des Ellipsoides, denn die beiden Leitungen sind im Inneren der Stange, des Quaders oder des Ellisoides angeordnet. Ein Wärmeaustausch innerhalb eines festen Werkstoffes ist dabei wesentlich effizienter als der Wärmeaustausch in einem flüssigen oder gasförmigen Medium.

Es ist besonders vorteilhaft, die beiden Leitungen in einem gemeinsamen Leitungssystem in der Form von zwei Kammern unterzubringen, so dass die Leitung aus zwei durch die Trennplatte voneinander abgeschirmten Kammern besteht, durch die die Milch im Gegenstromprinzip gepumpt ist. Eine solche Leitung kann nämlich kostengünstig aus einem dünnwandigen Ausgangskörper mit einem gemeinsamen Werkstoff gefertigt werden, der einen hohen Wärmeleitkoeffizienten aufweist. Folglich ist aus einem endlosen plattenförmigen Ausgangskörper eine schraubenlinienförmig gedrehte, um eine gemeinsame Symmetrieachse verlaufende zweikammerige Leitung herstellbar, die dann zum einen zu Transportzwecken an vier unterschiedliche Entnahme- und Einfüllstationen anschließbar ist und die zum anderen eine Wärmeübertragung zwischen den zu transportierenden Flüssigkeiten mit unterschiedlichem Temperaturgradienten ermöglicht und dabei einen hohen Wirkungsgrad aufweist.

Insbesondere wenn eine zweikammerige Leitung zu Transportzwecken der flüssigen Milch und zur Temperaturübertragung zwischen unterschiedliche temperierten Flüssigkeiten eingesetzt ist, kann die Querschnittsfläche ellipsenartig ausgestaltet sein, wodurch eine nahezu konstante Strömungsgeschwindigkeitsverteilung über die Querschnittsfläche der zweikammerrigen Leitung vorherrscht, denn es entstehen nahezu keine Eckbereiche, durch die aufgrund von Reibung die Strömungsgeschwindigkeit reduziert ist. Somit können aufgrund der konstanten Strömungsverhältnisse im Inneren der beiden Leitungen Ablagerungen von Partikeln der Milch vermieden werden.

In der Zeichnung ist ein erfindungsgemäßes Ausführungsbeispiel einer Fördervorrichtung und der Verfahrensablauf zur Fertigung eines die Fördervorrichtung bildenden Leitungssystems dargstellt, die nachfolgend näher erläutert sind. Im Einzelnen zeigt:

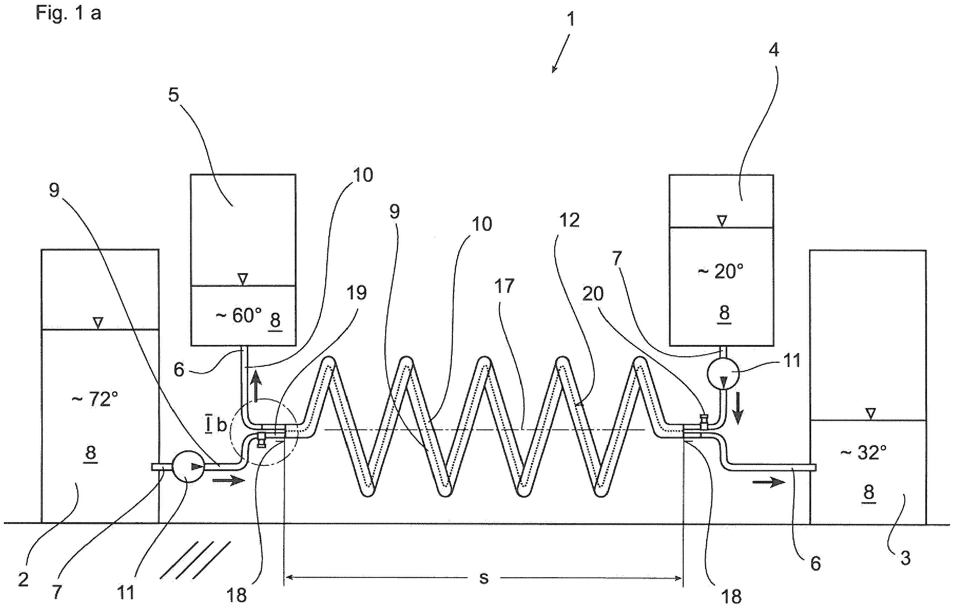

- Figur 1a: eine Fördervorrichtung, durch die aus vier Behältern mit jeweils einer Einfüll- oder Entnahmestation ein flüssiges Lebensmittel durch zwei thermisch über ein Wärmeübertragungsmedium gekoppelte Leitungen gefördert ist, in Seitenansicht,
- Figur 1 b: eine vergrößerter Ausschnitt Ib der Fördervorrichtung gemäß Figur 1a,
- Figur 2a: eine erste Ausführungsvariante einer zweikammerigen Leitung gemäß Figur 1 a,
- Figur 2b: eine zweite Ausführungsvariante einer zweikammerigen Leitung gemäß Figur 1a,
- Figur 2c: eine dritte Ausführungsvariante einer zweikammerigen Leitung gemäß Figur 1a,
- Figur 2d: eine vierte Ausführungsvariante einer zweikammerigen Leitung gemäß Figur 1a,
- Figur 2e: eine fünfte Ausführungsvariante einer zweikammerigen Leitung gemäß Figur 1a,
- Figur 3: eine weitere Ausgestaltung der Ausführungsvariante gemäß Figur 2c,
- Figuren 4a bis 4d: ein Herstellungsverfahren zur Fertigung einer zweikammerigen Leitung gemäß 1a und
- Figur 5: die Fördervorrichtung gemäß Figur 1a zur Energierückgewinnung in einer Pasteurisierungsanlage, mittels der Milch zu deren Pasteurisierung erhitzt und zu deren Lagerung abgekühlt ist.

In Figur 1a ist eine Fördervorrichtung 1 zu entnehmen, durch die insbesondere Milch 8 oder auch andere flüssige Lebensmittel aus vier Aufnahme-Behältern 2, 3, 4 und 5 zu transportieren ist. Die Milch 8 ist dabei mit unterschiedlichen Temperaturen in den Behältern 2, 3, 4 und 5 gelagert, im Behälter 2 hat die Milch 8 eine Temperatur von etwa 72°C, im Behälter 3 von 32°C, im Behälter 4 von 20°C und im Behälter 5 von 60°C. Die unterschiedlichen Temperaturen der Milch 8 entstehen beispielsweise beim Pasteurisieren oder beim Melken bzw. als Zwischenlager für den Weitertransport bzw. der Weiterverarbeitung.

Jeder der Behälter 2, 3, 4 und 5 weist entweder eine Einfüllstation 6 oder eine Entnahmestation 7 in Abhängigkeit von dem vorherrschenden Strömungsprinzip auf. Die Milch 8 wird zwischen den Einfüll- und Entnahmestationen 6 und 7 jeweils mittels einer Leitung 9 oder 10 transportiert. Zu diesem Zweck ist im Bereich der jeweiligen Entnahmestation 7 in die Leitung 9 oder 10 eine Pumpe 11 eingesetzt, durch die die Milch 8 durch die jeweilige Leitung 9 oder 10 gefördert ist,

Da die Milch 8 von der jeweiligen Temperatur in den Aufnahme-Behältern 2, 3, 4 und 5 zu einer anderen Temperatur abzukühlen oder zu erwärmen ist, um die Weiterverarbeitung, die Verfütterung und/oder den Transport zu ermöglichen, und um eine Energierückgewinnung und damit eine Energieeinsparung zu erreichen, sind die beiden Leitungen 9 und 10 mittels eines Wärmeübertragungsmediums 12 thermisch im Gleichgewicht stehend gekoppelt. Durch das Wärmeübertragungsmedium 12 sind die beiden Leitungen 9 und 10 zudem fest miteinander verbunden. Die Ausgestaltung des Wärmeübertragungsmediums 12 wird nachfolgend im Einzelnen erläutert.

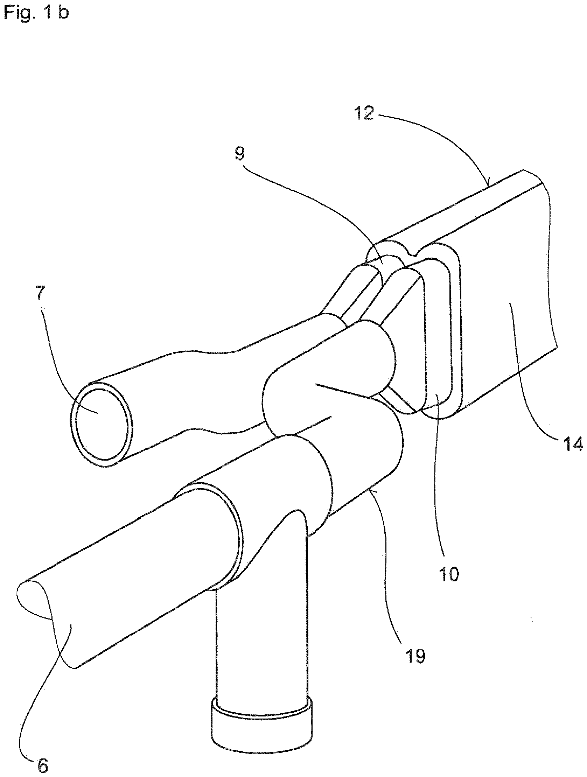

Aus Figur 1b ist der Übergangsbereich zwischen dem jeweiligen Aufnahme-Behälter 2, 3, 4 und 5 und den Leitungen 9 und 10 zu entnehmen, denn die Querschnittsflächen sind unterschiedlich. Zu Verbindungszwecken dient ein als Leitungsstutzen 19 ausgestalteter Adapter, dessen Querschnittsfläche an den beiden freien Stirnseiten jeweils mit der Querschnittsfläche der Aufnahmebehälter 2, 3, 4 und 5 bzw. den Leitungen 9 und 10 korrespondiert und daher flüssigkeitsdicht mit diesen verbunden werden kann. Zudem ist an dem Leitungsstutzen 19 jeweils eine Öffnung 20' vorgesehen, durch die beispielsweise Reinigungsflüssigkeiten in die Leitungen 9 und 10 eingepresst werden, um diese von Rückständen und Verschmutzungen zu befreien.

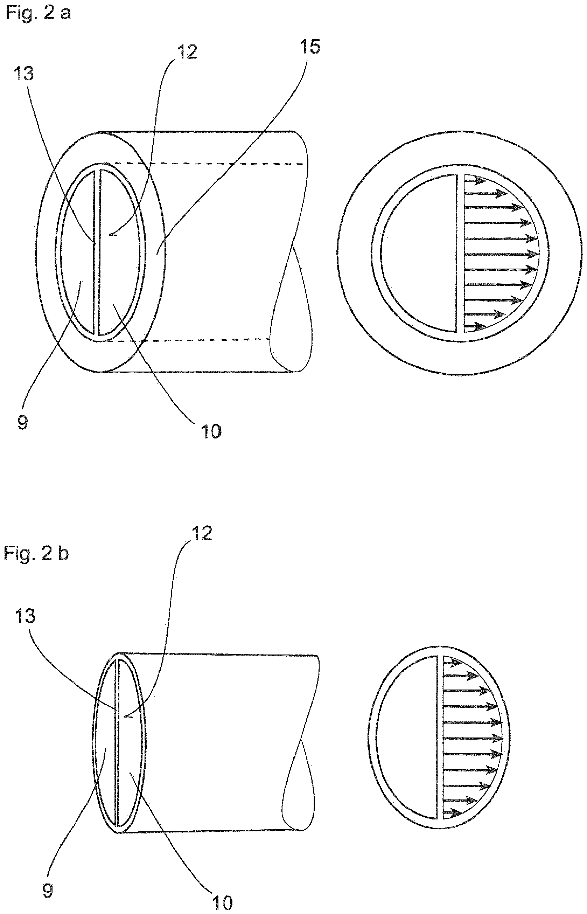

In den Figuren 2a bis 2e sind unterschiedliche Ausgestaltungen des Wärmeübertragungsmediums 12 zu entnehmen.

In Figur 2a ist zwischen den beiden Leitungen 9 und 10 eine Trennplatte 13 als Wärmeübertragungsmedium 12 angeordnet. Die dünnwandig ausgebildete Trennplatte 13 verläuft durch den Mittelpunkt des kreisförmigen Rohres, so dass eine zweikammerige Rohrleitung, bestehend aus den Leitungen 9 und 10 gebildet ist. Folglich sind die Strömungsquerschnitte der Leitungen 9 und 10 halbkreisförmig ausgestaltet.

Des Weiteren sind die beiden Leitungen 9 und 10 mittels eines Isolators 15 umschlossen, durch den die im Inneren der Leitungen 9 und 10 herrschenden Temperaturzustände nach außen isoliert sind. Folglich findet ausschließlich über die Trennplatte 13 eine Wärmeübertragung zwischen den in den Leitungen 9 und 10 im Gegenstrom fließenden Medien in Form von flüssiger Milch 8 statt. Die Trennplatte 13 ist aus einem Werkstoff gefertigt, der einen hohen Wärmeleitkoeffizienten aufweist. Solche Werkstoffe sind beispielsweise ausschließlich aus Metall oder aus einer Metallegierung, vorzugsweise aus Kupfer, Aluminium, Edelstahl oder Titan bzw. einer Legierung aus diesen Werkstoffen, herstellbar.

In Figur 2b sind die Leitungen 9 und 10 in ihrem Querschnitt ellipsenförmig ausgestaltet, so dass die Strömungsgeschwindigkeit in der Querschnittsfläche der Leitunggen 9 und 10 nahezu konstant sind und insbesondere in den Eckbereichen eine ausreichend groß bemessene Strömungsgeschwindigkeit herrscht, so dass in diesen Bereichen keine oder nur geringe Ablagerungen von Schwebstoffen oder Partikeln, die in der Milch 8 vorhanden sind, festgesetzt werden.

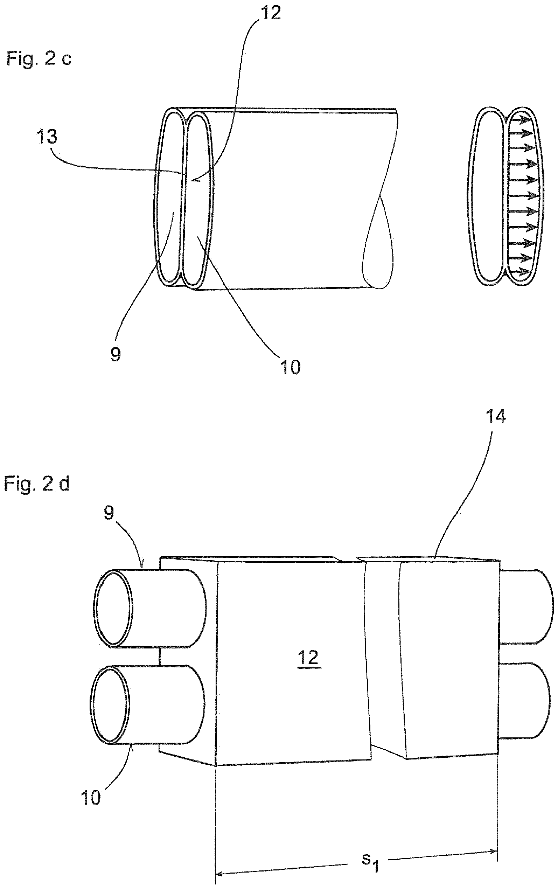

In Figur 2c ist der ellipsenförmige Querschnitt der beiden Leitungen 9 und 10 weiter verändert, denn die Ausdehnung des ellipsenförmigen Querschnittes einer der Leitungen 9 oder 10 bezogen auf die andere senkrecht dazu verlaufende Ausrichtung ist wesentlich größer bemessen und steht etwa in einem Verhältnis von 4 zu 1. Eine solche Ausgestaltung der Leitungsquerschnitte der Leitungen 9 und 10 führt dazu, dass die Strömungsgeschwindigkeit im Inneren der Leitungen 9 und 10 über den gesamten Querschnitt konstant gehalten sind, so dass die Ablagerungen in den Randbereichen vollständig vermieden sind. Des Weiteren weist die Trennplatte 13 eine erheblich vergrößerte Oberfläche auf, durch die somit die Wärmeübertragung zwischen den Leitungen 9 und 10 im Verhältnis zu dem Volumen der jeweiligen Leitung 9 und 10 verbessert ist.

In Figur 2d ist gezeigt, dass das Wärmeübertragungsmedium 12 auch als Quader 14 ausgestaltet sein kann und dass die beiden kreisförmigen Leitungen 9 und 10 beabstandet voneinander im Inneren des Quaders 14 angeordnet sind, um eine Wärmeübertragung durch den Quader 14 zu erreichen. Der Quader 14 wirkt also als fester Wärmeübertragungskörper, denn dieser ummantelt die beiden Leitungen 9 und 10 vollständig. Es ist jedoch auch verstellbar, dass der Quader 14 lediglich den Zwischenraum zwischen den beiden Leitungen 9 und 10 ausfüllt und in diesem Bereich eine Wärmeübertragung vornimmt.

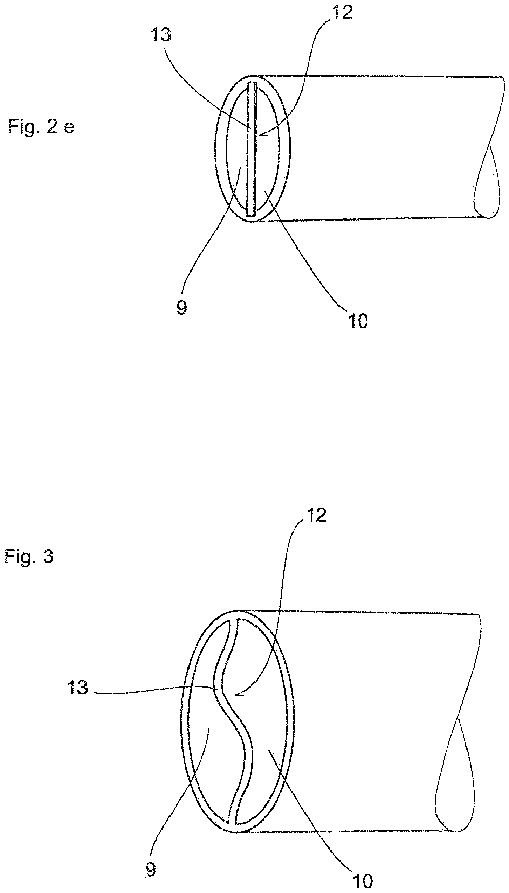

In Figur 2e ist eine andersartige Werkstoffauswahl für die Außenmantelfläche der Leitungen 9 und 10 dargestellt, die nämlich aus einem Silikon oder aus einem Silikongewebe hergestellt sind. Die Eigenschaften von Silikon im thermodynamischen Bereich der Wärmeübertragung ist als äußerst günstig zu bezeichnen, denn durch das Silikon bzw. ein Silikongewebe wird das Innere einer Leitung thermisch isoliert, so dass die dort im Inneren der Leitung 9 oder 10 vorherrschende Temperatur nicht nach außen abgegeben ist.

Nach Fertigstellung einer Rohrleitung aus einem Silikon oder Silikongewebematerial kann in das Innere eine dünnwandige Trennplatte 13 aus Metall oder aus einer Metalllegierung eingesetzt werden. Die Trennplatte 13 verläuft durch den Mittelpunkt des kreisförmigen Rohrstückes aus Silikon und bildet demnach zwei Leitungen 9 und 10, die durch die Trennplatte 13 voneinander flüssigkeitsdicht getrennt sind. Die Trennplatte 13 ist an der Innenwand des Rohrstückes befestigt.

Es ist auch vorstellbar, die aus Metall hergestellte Trennplatte 13 mit einem Silikon oder Silikongewebe zu ummanteln und bereits bei der Vulkanisation des Silikonmaterials die Trennplatte kreisförmig zu umschließen, so dass ein zweikammeriges Leitungssystem 9 und 10 entsteht.

Um die Wärmeübertragung zwischen den beiden Leitungen 9 und 10 mittels der Trennplatte 13 weiter zu erhöhen, ist diese wellenförmig ausgestaltet, wie dies in Figur 3 abgebildet ist. Durch diese konstruktive Maßnahme wird nämlich die Oberfläche der Trennplatte 13 in den beiden Leitungen 9 und 10 gegenüber einer planen Ausführung gesteigert, so dass die Wärmeübertragung optimiert ist.

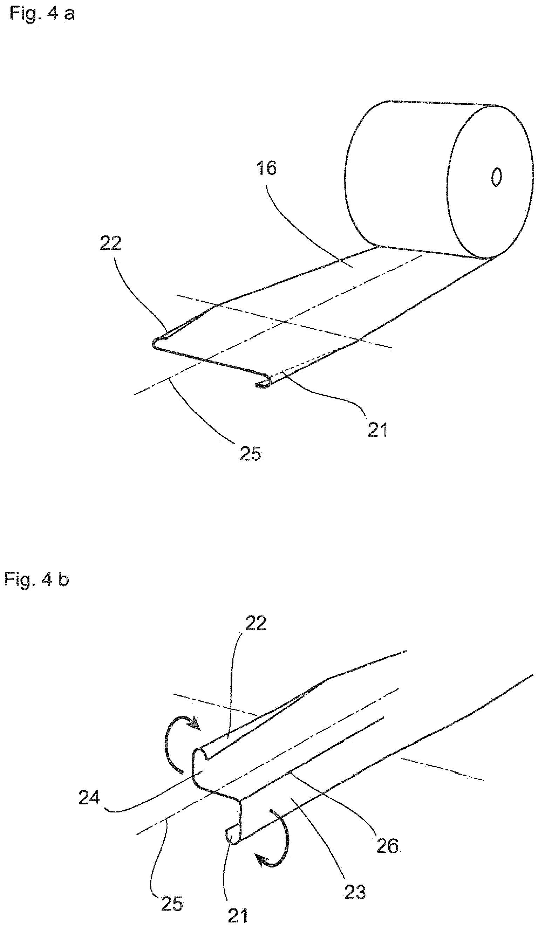

In den Figuren 4a bis 4d sind einzelne Verfahrensschritte zur Herstellung einer aus zwei Kammern bestehenden Leitung 9 und 10 gezeigt. Die Ausgangssituation ist in Figur 4a dargestellt. Dort ist ersichtlich, dass die Leitungen 9 und 10 aus einem gemeinsamen Ausgangswerkstück 16 zu fertigen sind, das bandförmig aufgerollt ist und eine in Abrollrichtung verlaufende Symmetrieachse 25 aufweist. Das Ausgangswerkstück 16 wird nach dem Abwickeln in einem ersten Verfahrensschritt nach oben bzw. unten, also gegenläufig zueinander, umgebogen, so dass eine Außenkante 21 bzw. eine Außenkante 22 entsteht.

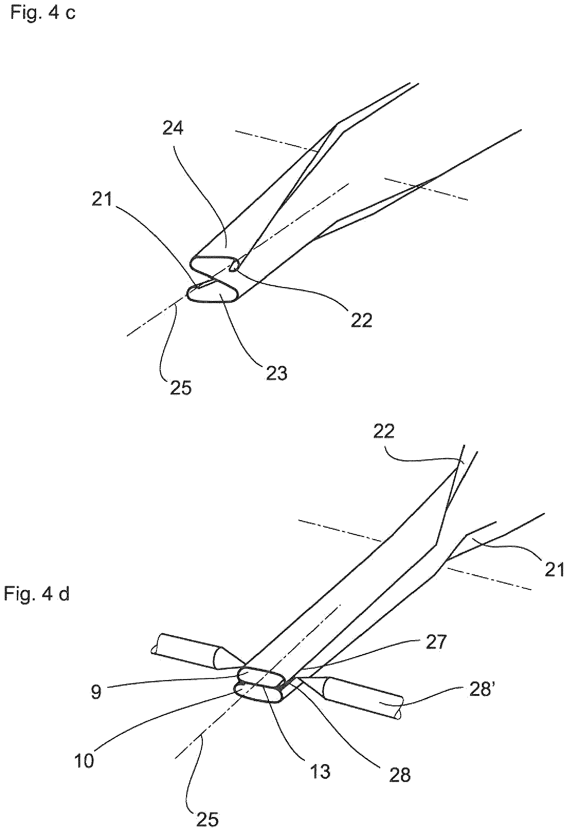

In Figur 4b sind die beiden Außenkanten 21 und 22 um eine Faltkante 26, die im Wesentlichen parallel zu der Symmetrieachse 25 und beabstandet zu dieser angeordnet ist, um 90° umgebogen, so dass die Außenkante 21 im gezeigten Ausführungsbeispiel nach unten und die Außenkante 22 nach oben, also gegenläufig versetzt zueinander, ausgerichtet sind. In einem weiteren Verfahrensschritt erfolgt gemäß Figur 4c eine weitere Umbiegung der Außenkante 21 und 22, die solange aufeinander zu bewegt sind, bis gemäß Figur 4d die Außenkanten 21 und 22 jeweils auf der gegenüberliegenden Oberfläche in Form einer Stoßkante 27 aneinander anliegen.

Um die Stoßkante 27 flüssigkeitsdicht mit der Oberfläche des Ausgangswerkstückes 16 zu verbinden, ist eine Schweißnaht 28 vorgesehen, die mittels eines schematisch dargestellten Schweißbrenners 28' erzeugt ist.

Nach Abschluß dieser Fertigungsschritte entsteht somit eine erste und zweite Leitung 9 und 10, die durch eine Trennplatte 13 voneinander getrennt sind. Die derart gefertigten Leitungen 9 und 10 sind beispielsweise gemäß Figur 2c ausgestaltet und können in die Fördereinrichtung nach Figur 1a eingebaut sein.

Um die Länge der Förderstrecke S zu reduzieren und um gleichzeitig eine Vergrößerung der Wärmeübertragungsstrecke zu erreichen, sind die Leitungen 9 und 10 schraubenlinienförmig um eine gemeinsame Symmetrieachse 17 gebogen.

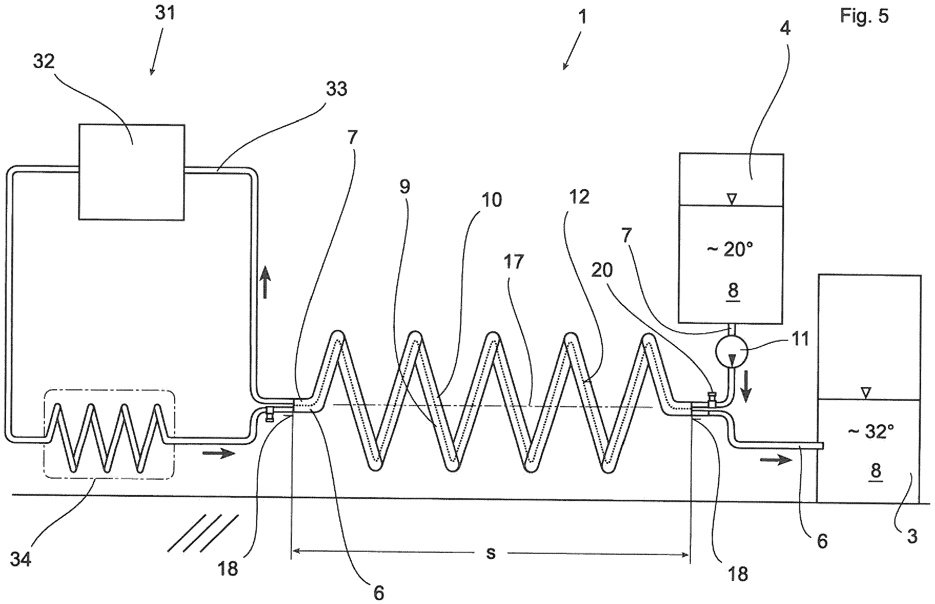

In Figur 5 ist eine Pasteurisierungsanlage 31 abgebildet, durch die flüssige Milch 8 mittels eines Erhitzers 32 von einer Temperatur von etwa 60°C auf 72°C erwärmt wird. In diesem Temperaturbereich werden nämlich die in der Milch 8 vorhandenen Keime und Bakterien weitgehend abgetötet, so dass die Haltbarkeit der Milch 8 erhöht ist. Die auf 72°C erhitzte Milch 8 wird mittels eines Transportrohres 33 gefördert und gelangt, nachdem diese durch den Erhitzer 32 auf 72°C temperiert wurde, in einen Heißhalter 34, der schraubenlinienförmig ausgestaltet ist und in dem die Milch 8 für etwa 15 bis 30 Sekunden durchfließt. Anschließend wird die derart erhitzte Milch 8 mit einer Temperatur von 72°C in eine der beiden Einfüllstationen der Fördervorrichtung 1 eingeleitet. Die mit 72°C erhitzte Milch 8 wird demnach durch eines der beiden Leitungen 9 gefördert und gelangt nach Verlassen der Leitung 9 aus der Entnahmestation 7 mit einer Temperatur von etwa 32°C in einen der Aufnahmebehälter 3.

Die zu pasteurisierende Milch 8 wird aus dem Aufnahmebehälter 4 mit einer Temperatur von etwa 20°C in die andere Leitung 10 der Fördervorrichtung 1 mittels der Pumpe 11 eingeleitet, so dass die Milch 8 durch die Leitung 10 im Gegenstromprinzip bezogen auf die erhitzte Milch 8 mit einer Temperatur von 72°C gefördert ist. Die Milch 8 aus dem Aufnahmebehälter 4 wird dann von einer Temperatur von etwa 20°C durch die erhitzte Milch 8 mit einer Temperatur von 72°C nach Verlassen der Förderstrecke S an der Entnahmestation 7 mit einer Temperatur von etwa 60°C ausgeleitet und mittels des Transportrohres 33 von der Entnahmestation 7 zu dem Erhitzer 32 gefördert.

Die Fördervorrichtung 1 dient demnach für die Pasteurisierungsanlage 31 als Energierückgewinnung, denn die zu pasteurisierende Milch 8 mit einer Temperatur von 72°C wird verwendet, um eine gelagerte Milch 8 mit einer Temperatur von 20°C vorzuerwärmen, so dass der Erhitzer 32 weniger Energie benötigt, denn die Milch 8 ist lediglich von einer Temperatur von 60°C auf 72°C zu erwärmen.

## Patentansprüche

1. Fördervorrichtung (1) bestehend aus zwei Einfüll- (6) und zwei Entnahmestationen (7), durch die jeweils ein flüssiges Nahrungsmittel (8), insbesondere Milch (8), mit unterschiedlicher Temperatur transportiert ist,
- aus zwei Leitungen (9, 10), durch die jeweils eine der Einfüll- und Entnahmestationen (6, 7) paarweise verbunden sind,
- aus mindestens einer Pumpe (11), durch die das Nahrungsmittel (8) im Gegenstrom durch die beiden Leitungen (9, 10) gepumpt ist
- und aus einem Wärmeübertragungsmedium (12), durch das die beiden Leitungen (9, 10) thermisch miteinander gekoppelt sind,
**dadurch gekennzeichnet,**
das das Wärmeübertragungsmedium (12) als fester Körper (13 oder 14) ausgestaltet ist, dass der Körper (13, 14) die beiden Leitungen (9, 10) ganz oder teilweise umschließt und diese fest miteinander verbindet.

2. Fördervorrichtung nach Anspruch 1,
**dadurch gekennzeichnet,**
**dass** der Körper (13, 14) aus einem metallischen Werkstoff oder aus einer Metalllegierung, der jeweils einen hohen Wärmeleitkoeffizienten aufweist, gefertigt ist

3. Fördervorrichtung nach Anspruch 1 oder 2,
**dadurch gekennzeichnet,**
**dass** der Körper (13) als dünnwandige Trennplatte (13) ausgebildet ist, dass die beiden Leitungen (9, 10) unmittelbar benachbart zu der Trennplatte (13) angeordnet sind und dass die Trennplatte (13) jeweils ein Bestandteil der Leitung (9 oder 10) ist.

4. Fördervorrichtung nach Anspruch 1 oder 2,
**dadurch gekennzeichnet,**
**dass** der Körper (14) als Stange, als Quader oder als Ellipsoid ausgestaltet ist und dass die beiden Leitungen (9, 10) parallel zueinander verlaufend im Inneren des Körpers (14) angeordnet sind.

5. Fördervorrichtung nach Anspruch 3,
**dadurch gekennzeichnet,**
**dass** die Trennplatte (13) im Querschnitt wellenförmig zur Vergrößerung der Oberfläche der Trennplatte (13) ausgestaltet ist.

6. Fördervorrichtung nach Anspruch 3,
**dadurch gekennzeichnet,**
**dass** die beiden Leitungen (9, 10) und die Trennplatte (13) aus einem gemeinsamen Ausgangswerkstück (16), vorzugsweise aus einem endlosen bandförmigen Ausgangswerkstück (16), gefertigt sind.

7. Fördervorrichtung nach Anspruch 6
**dadurch gekennzeichnet,**
**dass** die beiden Leitungen (9, 10) und die Trennplatte (13) schraubenlinienförmig um eine gemeinsame Symmetrieachse (17) gebogen sind.

8. Fördervorrichtung nach einem der vorgenannten Ansprüche,
**dadurch gekennzeichnet,**
**dass** der Körper 13, 14) als Wärmeübertragungsmedium (12) aus Metall oder einer Metalllegierung, vorzugsweise aus Kupfer, Aluminium, Edelstahl oder Titan, gefertigt ist.

9. Fördervorrichtung nach Anspruch 1,
**dadurch gekennzeichnet,**
**dass** die jeweilige Leitung (9, 10) aus einem wärmeisolierenden Werkstoff, vorzugsweise aus Silikon oder einem Silikongewebe, hergestellt ist und dass in die Leitung (9, 10) eine wärmeleitende Trennplatte (13) eingesetzt ist, die seitlich an der Innenwand der jeweiligen Leitung (9, 10) befestigt ist.

10. Fördervorrichtung nach einem der vorgenannten Ansprüche,
**dadurch gekennzeichnet,**
**dass** der Querschnitt der jeweiligen Leitung (9, 10) kreisförmig, halbkreisförmig, elliptisch, halbelliptisch oder rechteckförmig ausgestaltet ist.

11. Fördervorrichtung nach einem der vorgenannten Ansprüche,
**dadurch gekennzeichnet,**
**dass** zwischen dem jeweiligen Ende (18) der Leitungen (9, 10) und den Einfüll- bzw. Entnahmestationen (6, 7) der Leitungen (9, 10) jeweils ein Leitungsstutzen (19) als Adapter eingesetzt ist, der mit dem Querschnitt eines Transportrohres (33) bzw. einer Öffnung eines Aufnahmebehälters (2, 3, 4, 5) korrespondiert.

12. Fördervorrichtung nach einem der vorgenannten Ansprüche,
**dadurch gekennzeichnet,**
**dass** in jede der Leitungen (9, 10) mindestens eine zusätzliche Einfüll- und Entnahmeöffnung (20) eingearbeitet ist und dass durch die Einfüll- und Entnahmeöffnungen (20) Reinigungsmittel zur Säuberung der Leitungen (9, 10) ein- und ausgeführt sind.

13. Verfahren zur Herstellung einer Leitung (9, 10), insbesondere für eine Leitung (9, 10), die aus zwei Kammern besteht,
**gekennzeichnet durch**
die Verfahrensschritte:
- Abwickeln eines endlosen plattenförmigen Ausgangswerkstückes (16), vorzugsweise aus Metall,
- Umbiegen der beiden Außenkanten (21, 22) des Ausgangswerkstückes (16) in entgegengesetzter Richtung,
- Falten der zwei Seitenbereiche (23, 24) des Ausgangswerkstückes (16) in einem Winkel von etwa 90° um eine von der Symmetrieachse (25) des Ausgangswerkstückes (16) versetzt und parallel zu dieser verlaufenden Faltkante (26),
- vollständiges Umfalten der beiden Seitenbereiche (23, 24) um die jeweilige Faltkante (26), bis die beiden Außenkanten (21, 22) auf der jeweils gegenüberliegenden Oberfläche des anderen Seitenbereiche (22, 21) aufliegen und
- Verschweißen oder Versiegeln der Seitenbereiche (21, 22) an der Stoßkante (27).

14. Verfahren nach Anspruch 13,
**dadurch gekennzeichnet,**
**dass** die Leitung (9, 10) aus zwei elliptischen Kammern besteht und dass die Leitung (9, 10) um eine gemeinsame Symmetrieachse (17) schraubenlinienförmig gebogen ist.
